# EUROPÄISCHE PATENTSCHRIFT

(11) **EP 1 869 366 B1**
(45) Veröffentlichungstag und Bekanntmachung des Hinweises auf die Patenterteilung: **19.05.2010**
(21) Anmeldenummer: 06723753.7
(22) Anmeldetag: 27.03.2006
(51) Int. Cl.: F21V 31/03, H05B 3/84

(54) **SCHEINWERFER**
HEADLIGHT
PHARE

(30) Priorität: 06.04.2005 DE 102005015903
(43) Veröffentlichungstag der Anmeldung: 26.12.2007
(73) Patentinhaber: Bayer MaterialScience AG, 51368 Leverkusen (DE)
(72) Erfinder: DÖBLER, Martin, 40593 Düsseldorf (DE); POPHUSEN, Dirk, 51467 Bergisch Gladbach (DE); BOLL, Matthias, 51061 Köln (DE); GUNTERMANN, Udo, 47800 Krefeld (DE); JONAS, Friedrich, 52066 Aachen (DE); ELSCHNER, Andreas, 45479 Mülheim (DE)
(86) Internationale Anmeldenummer: PCT/EP2006/002776
(87) Internationale Veröffentlichungsnummer: WO 2006/105886

(56) Entgegenhaltungen:
- WO-A-2004/049763
- DE-A- 10 346 270
- DE-A1- 4 333 655
- DE-A1- 10 012 234
- DE-A1- 10 055 162
- DE-A1- 10 205 695
- DE-A1- 19 724 098

## Beschreibung

Die Erfindung betrifft einen Scheinwerfer, insbesondere für Fahrzeuge, umfassend ein Scheinwerfergehäuse mit einer Lichtaustrittsöffnung, eine Abdeckscheibe zur Abdeckung der Lichtaustrittsöffnung, eine Straahlungsquelle sowie eine Heizeinrichtung.

Scheinwerfer, wie beispielsweise Frontscheinwerfer, Heckscheinwerfer und andere Beleuchtungseinrichtungen für Kraftfahrzeuge, benötigen in der Regel keine spezielle Enteisumgsvorrichtung bzw. Vorrichtung zur Vermeidung von Beschlagsbildung, sofern herkömmlich Halogenlampe oder Gasentladungslampen verwendet werden. Diese produzieren genügend viel Wärme, um Bis und Schnee abzutauen und Beschlagsbildung durch Kondenswasser zu entfernen, Scheinwerfer mit kalten Leuchtmitteln wie Licht emittierende Dioden (LED, light emitting diode) oder auch Scheinwerfer mit Xenonlampen erzeugen hingegen keine ausreichende Wärmemenge und zeigen daher eine zu geringe Abtauleistung. Eisbildung oder Beschlagsbildung auf der Abdeckscheibe von Scheinwerfern ist nicht nur aus ästhetischen Gründe störend. Aus Sicherheitsgunden sollte der Lichtstrahl beim Austritt aus dem Scheinwerfer nicht gedämpft oder gestreut werden.

Aus DB 103 46 270 A ist ein Fahrzeugscheinwerfer bekannt in dessen Gechäuse eine Heizeinrichtung, vorzugsweise ein PTC-Heizelement (positive temperature coefficient), augeordnet ist. In DE 103 46 270 A wird auch eine Kombination eines PTC-Heizelament mit einer herkömmlichen Lichtquelle beschrieben, welche einen hohen Infrarot-Anteil besitzt, wie beispielsweise Halogenlampen. Ein Hauptvorteil von LED-Scheinwerfer ist jedoch der geringere Bauraum und die größere Designfreiheit. Eine Kombination aus Halogen- und LED-Scheinwerfer ist daher nicht wünschenswert.

JP 2003197013 A, JP 2002150812 A und JP 2002211309 A beschreiben den Einbau von Heizdrähten in die Abdeckscheibe von Fahrzeugscheinwerfern. Herkömmliche Heizdrähte sind aber deutlich sichtbar und sind aus ästhetischen Gründen nicht akzeptabel. Gewünscht sind nicht sichtbare oder nur schwer erkennbare Enteisungsmöglichkeiten.

JP 10312705 A beschreibt den Einbau von Folien oder Platten in Fahrzeugscheinwerfern durch - Forlienhinterspritzen. Die Folien oder Platten sind mit Leitpasten versehen.

In der DE 197 24 098 A wird ein Scheinwerfer beschrieben, der auf der Innenseite der Abdeckscheibe eine Heizvorrichtung aufweist. Ausführungsformen der elektrisch leitenden Schicht können unter anderem eine Metallschicht oder elektrisch leitender Kunststoff sein. Es wird nicht offenbart, aus welchem Material ein solche Schicht vorzugsweise sein sollte oder welche Eigenschaften diese aufweisen sollte.

Aus der DE 100 55 162 A ist eine Schutzscheibe für Außenleuchten eines Kraftfahrzeugs enthaltend eine Beschichtung aus einem elektrisch leitendem Material, welches jedoch nicht näher spezifiziert wird, bekannt.

In der DE 43 33 655 A, die eine Heizvorrichtung für einen KFZ-Scheinwerfer mit spezieller Anordnung beansprucht, wird ebenfalls nur allgemein eine elektrisch leitfähige, lichtdurchlässige Beschichtung der Abdeckscheibe beschrieben.

Die WO 2004/049763 A beschreibt Heizfolien enthaltend mindestens eine aufgedampfte metallische Leitschicht. Die Heizfolien können optional eine Schicht aus einem leitfähigen Polymeren, die zur Überbrückung von Bruchstellen in der Leitschicht dienen soll, enthalten. Anwendungen, bei denen Transparenz gefordert ist, sind für diese Heizfolien nicht erwähnt.

Die Aufgabe der vorliegenden Erfindung besteht darin, einen Scheinwerfer, insbesondere für Fahrzeuge, bereitzustellen, der auf einfache Weise Enteisung oder Kondenswasserentfernung ermöglicht. Die Enteisungsvorrichtung soll dabei nicht sichtbar oder nur schwer erkennbar sein.

Die Aufgabe wird dadurch gelöst, dass die Abdeckscheibe des Scheinwerfers mit wenigstens einer transparenten elektrisch leitfähigen Schicht bedeckt ist.

Gegenstand der Erfindung ist ein Scheinwerfer für Fahrzeuge, umfassend ein Scheinwerfergehäuse mit einer Lichtaustrittsöffnung, eine Abdeckscheibe zur Abdeckung der Lichtaustrittsöffnung und eine Strahlungsquelle sowie eine Heizeinrichtung, wobei die Heizeinrichtung wenigstens eine transparente elektrisch leitfähige Schicht ist, welche auf der Abdeckscheibe aufgebracht ist

Als Scheinwerfer eignen sich alle bekannten Scheinwerfer, insbesondere Fahrzeugscheinwerfer. Vorzugsweise handelt es sich um Scheinwerfer mit wenigstens einer Licht emittierenden Diode als Lichtquelle.

Die Abdeckscheibe zur Abdeckung der Lichtaustrittsöffnung kann aus jedem beliebigen transparenten Werkstoff bestehen. Die Oberfläche kann strukturiert oder unstrukturiert sein. Die Abdeckscheibe kann auch aus mehreren Schichten aufgebaut sein. Beispielsweise können Silikatgläser eingesetzt werden. Auch transparente Thermoplasten können verwendet werden. Die Thermoplasten können lackiert oder unlackiert sein. Als Lacke kommen handelsübliche Kratzfestlacke, z.B. auf Siloxan-, Polyurethan- oder Acrylatbasis, in Frage.

Als Thermoplasten eignen sich z.B. Polycarbonate oder Copolycarbonate auf Basis von Diphenolen, der Poly- oder Copolyacrylate und Poly- oder Copolymethacrylate, vorzugsweise Polymethylmethacrylat, Poly- oder Copolymere mit Styrol, vorzugsweise transparentes Polystyrol oder Polystyrolacrylnitril. (SAN), transparente thermoplastische Polyurethane, sowie Polyolefme, vorzugsweise transparente Polypropylentypen, oder Polyolefine auf der Basis von cyclischen Olefinen (z.B. TOPAS^{®}, Ticona), Poly- oder Copolykondensate der Terephthalsäure, vorzugsweise Poly- oder Copolyethylenterephthalat (PET oder CoPET) oder glycol-modifiziertes PET (PETG).

Besonders bevorzugte Materialien für Scheinwerferabdeckscheiben sind Silikatglas, Bisphenol-A-polycarbonat, Copolycarbonate aus Bisphenol-A und 1,1-Bis-(4-hydroxyphenyl)-3,3,5-trimethylcyclohexan, sowie Poly- und Comethylmethacrylate.

Die Abdeckscheibe des erfindungsgemäßen Scheinwerfers ist mit wenigstens einer transparenten leitfähigen Schicht versehen. Die transparente leitfähige Schicht kann entweder auf die Außenseite oder die Innenseite der Abdeckscheibe des Scheinwerfers aufgebracht sein. Bevorzugt ist sie auf der Innenseite der Abdeckscheibe aufgebracht Die transparente leitfähige Schicht kann entweder die gesamte Abdeckscheibe oder nur Bereiche, z.B. bänderförmige oder streifenförmige Bereiche, der Abdeckscheibe bedecken.

Als Materialien für eine transparente leitfähige Schicht kommen TCOs (transparent conductive oxides), z.B. ITO (Zinndotiertes Indiumoxid), ATO (Antimonzinnoxid), FTO (Fluordotiertes Zinnoxid) oder AZO (Aluminiumzinkoxid), oder organische transparente leitfähige Beschichtungen in Frage.

Bevorzugt werden organische leitfähige Beschichtungen verwendet. Geeignete Polymere zur Herstellung einer transparenten elektrisch leitfähigen Beschichtung sind Polyaniline, Polypyrrole oder Polythiophene. Bevorzugt sind Polythiophene auf Basis von gegebenenfalls substituierten 3,4-Ethylendioxythiophenen. Die Herstellung dieser 3,4-Polyethylendioxythiophene ist z.B. in EP 440 957 A beschrieben. Besonders bevorzugt ist 3,4-Polyethylendioxythiophen/Polystyrolsulfonat.

Die transparente elektrisch leitfähige Schicht kann durch an sich bekannte Verfahren wie Aufsprühen, Rakeln oder Vorhanggießen auf die Scheinwerferabdeckscheibe aufgebracht werden.

Die Schichtdicke der transparenten elektrisch leitfähigen Schicht beträgt vorzugsweise 0,1 bis 10 µm, besonders bevorzugt 0,2 bis 2 µm als Trockenfilm.

Die transparente elektrisch leitfähige Schicht als Heizeinrichtung ist zweckmäßigerweise mit geeigneten Sensoren und einer geeigneten Regelungselektronik versehen, um die Leistungsaufnahme der Beschichtung automatisch zu betreiben und mit dem jeweiligen Belastungszustand des Bordnetzes abzustimmen.

### Beispiel

Zum Nachweis der Heizwirkung einer Schicht aus 3,4-Polyethylen-dioxythiophen/Polystyrolsulfonat wurde eine Polycarbonatfolie der Dicke 125 µm mit einer 3,4-Polyethylendioxythiophen/Polystyrolsulfonat enthaltenen Dispersion Baytron F HC (Hersteller: H. C. Starck GmbH) in einer Nassfilmdicke von 24 µm beschichtet und anschließend 5 Minuten bei 130°C getrocknet.

Die Probe hatte gute optische Eigenschaften wie Transparenz, Farbe und war frei von sichtbarer Trübung. Die Beschichtung hattte einen Oberflächenwiderstand von 130 ohm/sq.

Die beschichtete Polycarbonatfolie wurde auf 10 cm x 10 cm geschnitten und an zwei gegenüberliegenden Seiten mit einer elektrischen Spannungsversorgung kontaktiert. Das gemessene Strom-Spannungsverhalten ist in der nachfolgenden Tabelle dargestellt. Die Folie wurde dabei spürbar warm.

| Spannung (V) | Strom (mA) |
|---|---|
| 5 | 39 |
| 10 | 78 |
| 15 | 117 |
| 20 | 157 |
| 25 | 197 |
| 30 | 235 |
| 35 | 274 |

## Patentansprüche

1. Scheinwerfer umfassend ein Scheinwerfergehäuse mit einer Lichtaustrittsöffnung, eine Abdeckscheibe zur Abdeckung der Lichtaustrittsöffnung und eine Strahlungsquelle sowie eine Heizeinrichtung, **dadurch gekennzeichnet, dass** die Heizeinrichtung wenigstens eine transparente elektrisch leitfähige Schicht ist, welche auf der Abdeckscheibe aufgebracht ist, wobei die transparente elektrisch leitfähige Schicht eine organische elektrisch leitfähige Schicht aus einem Polythiophen ist.

2. Scheinwerfer nach Anspruch 1, **dadurch gekennzeichnet, dass** die transparente elektrisch leitfähige Schicht auf der Innenseite der Abdeckscheibe angebracht ist.

3. Scheinwerfer nach einem der Ansprüche 1 oder 2, **dadurch gekennzeichnet, dass** die transparente elektrisch leitfähige Schicht eine organische elektrisch leitfähige Schicht aus 3,4-Polyethylendioxythiophen/Polystyrolsulfonat ist.

4. Scheinwerfer nach einem der Ansprüche 1 oder 2, **dadurch gekennzeichnet, dass** die Strahlungsquelle eine Licht emittierende Diode ist.

## Claims

1. Light-projector comprising a light-projector casing with a light-exit aperture, a cover disc for covering the light-exit aperture, and a radiation-source as well as a heating device, **characterised in that** the heating device is at least one transparent electrically conductive layer that has been applied to the cover disc, wherein the transparent electrically conductive layer is an organic electrically conductive layer consisting of a polythiophene.

2. Light-projector according to Claim 1, **characterised in that** the transparent electrically conductive layer has been applied on the inside of the cover disc.

3. Light-projector according to either of Claims 1 or 2, **characterised in that** the transparent electrically conductive layer is an organic electrically conductive layer consisting of 3,4-polyethylene dioxythiophene / polystyrene sulfonate.

4. Light-projector according to either of Claims 1 or 2, **characterised in that** the radiation-source is a light-emitting diode.

## Revendications

1. Projecteur ou phare comprenant un boitier de projecteur présentant une ouverture de sortie de lumière, une vitre de projecteur pour recouvrir l'ouverture de sortie de lumière, et une source de rayonnement ainsi qu'un dispositif de chauffage, **caractérisé en ce que** le dispositif de chauffage est constitué par au moins une couche transparente et électriquement conductrice, qui est appliquée sur la vitre de recouvrement, la couche transparente électriquement conductrice est une couche organique électriquement conductrice en un poly-thiophène.

2. Projecteur ou phare selon la revendication 1, **caractérisé en ce que** la couche transparente électriquement conductrice est rapportée sur le côté intérieur de la vitre de recouvrement.

3. Projecteur ou phare selon l'une des revendications 1 ou 2, **caractérisé en ce que** la couche transparente électriquement conductrice est une couche organique électriquement conductrice en en 3,4-polyéthylène-dioxythiophène/sulfonate de polystyrène.

4. Projecteur ou phare selon l'une des revendications 1 ou 2, **caractérisé en ce que** la source de rayonnement est une diode émettrice de lumière ou diode électroluminescente.
